# EUROPEAN PATENT SPECIFICATION

(11) **EP 3 557 095 B1**
(45) Date of publication and mention of the grant of the patent: **07.04.2021**
(21) Application number: 17881722.7
(22) Date of filing: 12.12.2017
(51) Int. Cl.: F16H 7/12, F16C 33/74, F16H 7/08

(54) **SUPPORT STRUCTURE FOR TENSIONER DEVICE**
STÜTZSTRUKTUR FÜR EINE SPANNVORRICHTUNG
STRUCTURE DE SUPPORT DE DISPOSITIF TENDEUR

(30) Priority: 15.12.2016 JP 2016243366
(43) Date of publication of application: 23.10.2019
(73) Proprietor: NTN Corporation, Osaka-shi, Osaka 550-0003 (JP)
(72) Inventor: TANAKA Tadahisa, Iwata-shi Shizuoka 438-8510 (JP)
(74) Representative: Grünecker Patent- und Rechtsanwälte PartG mbB
(86) International application number: PCT/JP2017/044502
(87) International publication number: WO 2018/110528

(56) References cited:
- EP-A1- 2 913 556
- WO-A1-2014/065320
- DE-A1- 10 062 983
- JP-A- 2014 084 981
- JP-A- 2014 084 991
- JP-A- 2016 145 612
- JP-A- 2016 156 430
- US-B2- 7 901 140

## Description

### TECHNICAL FIELD

The present invention relates to a support structure for a tensioner device. Such a support structure is disclosed in EP2913556A.

### BACKGROUND ART

A belt transmission device is used in various machines to transmit motive power. For example, a belt transmission device is used in an automobile engine to transmit the rotation of the crankshaft of the engine to engine accessories such as an alternator, a water pump, and an air conditioner compressor, thereby driving the engine accessories. Such a belt transmission device generally includes a tensioner device (tension adjusting device) for adjusting the tension of the belt.

The tensioner device includes a tensioner, and a bracket (called a "pulley arm") pivotable about a pivot shaft disposed on the loose side of the belt. A tension pulley is supported on an end of the pulley arm remote from the pivot shaft. The tensioner biases the pulley arm in the direction in which the tension pulley presses the belt, thereby keeping the tension of the belt constant.

The pulley arm is formed, for example, by casting using an aluminum alloy or iron as its material. The pulley arm includes, for example, a pivotally supported portion pivotally supported by a stationary portion such as a cylinder block of an engine; a pulley support portion rotatably supporting the tension pulley; and a damper attachment portion to which one end of the tensioner is pivotally attached. The tensioner includes, at the other end thereof, a damper support portion pivotally supported by the stationary portion such as the cylinder block of the engine. For example, a hydraulic auto-tensioner utilizing a damper function due to hydraulic pressure is frequently used as the above tensioner.

For example, the below-identified Patent Documents 1 and 2 disclose the structure of a pivotally coupled portion, such as the above-described pivotally supported portion, damper attachment portion or damper support portion.

According to this structure, a cylindrical support member (e.g., a bearing bush) fitted in a through hole of the coupled portion is fixed in position by a support bolt functioning as a pivot shaft about which a first member is pivotable relative to a second member. The opposed surfaces of the cylindrical support member and a liner (e.g., an elastic ring) press-fitted against the inner surface of the through hole constitute sliding surfaces of a sliding bearing. The support bolt is inserted through the through hole, and the distal end of the support bolt is screwed into a threaded hole of the second member so that the support bolt is fixed in position together with the cylindrical support member.

Thrust washers or other washers are mounted to the respective axial sides of the sliding bearing, and pressed axially inwardly by tightening the support bolt, thereby closing both ends of the bearing space of the sliding bearing.

### PRIOR ART DOCUMENTS

### PATENT DOCUMENTS

Patent document 1: Japanese Unexamined Patent Application Publication No. H09-170447
Patent document 2: Japanese Unexamined Patent Application Publication No. 2016-84875

### SUMMARY OF THE INVENTION

### PROBLEMS TO BE SOLVED BY THE INVENTION

According to such a conventional support structure for a tensioner device, both axial ends of the cylindrical support member (e.g., a bearing bush) fixed in position by the support bolt are located axially outwardly of the respective axial ends of the liner (e.g., an elastic ring) press-fitted against the inner surface of the through hole. Also, a radial gap is defined between the radially outer surface of the cylindrical support member and the radially inner surface of the liner. Therefore, it is necessary to prevent foreign matter from entering the radial gap between the cylindrical support member and the liner from around the respective end portions of the radially outer surface of the cylindrical support member.

In Patent document 2, as discussed above, both ends of such a sliding bearing are sealed with thrust washers or other washers by tightening a bolt. However, a further measure needs to be taken to reliably prevent the entry of foreign matter at all times under various use conditions.

It is an object of the present invention to provide a support structure for a tensioner device which is capable of reliably prevent foreign matter from entering its sliding bearing pivotally supporting a member of the tensioner device such as the pulley arm.

### MEANS FOR SOLVING THE PROBLEMS

In order to achieve the above object, the present invention provides a support structure having the features of claim 1.

The lip portion may be in sliding contact with the outer surface of the cylindrical support member. Alternatively, the support structure may further comprise an end surface sealing member in abutment with an axial end surface of the cylindrical support member such that the lip portion is in sliding contact with an axially inner surface of the end surface sealing member.

The end surface sealing member may be constituted by an inner end surface of a head of a support bolt screwed into the first member. Alternatively, the end surface sealing member may comprise a slinger member opposed through a gap to an end surface of the second member around an opening of the through hole.

For the above support structure, the through hole may include a step on an axial end portion of the inner surface of the through hole, and the base portion may be press-fitted against an inner surface of the step.

For the above support structure, the base portion and the lip portion may be constituted by a covering member made of rubber or resin, and the seal member may further comprise a core embedded in the covering member.

### EFFECTS OF THE INVENTION

According to the present invention, the sliding bearing is constituted by a cylindrical support member fixed to the outer periphery of the support shaft, and a liner press-fitted in the through hole, and further includes a seal member providing a seal between the inner surface of the through hole and the outer surface of the cylindrical support member, the seal member including a base portion press-fitted against the inner surface of the through hole, and a lip portion extending from the base portion. With this arrangement, the seal member sealing the bearing space of the sliding bearing is fixed to a member located outwardly of the sliding bearing, and the lip portion is opposed to an inner member located inwardly of the sliding bearing or to a member integral with this inner member. Therefore, it is possible to reliably prevent foreign matter from entering the sliding bearing.

### BRIEF DESCRIPTION OF THE DRAWINGS

Fig. 1 is an overall view of a tensioner unit/device in which a support structure for a tensioner device according to the present invention is used.
Fig. 2 is a sectional view illustrating a support structure for a tensioner device according to an embodiment of the present invention.
Fig. 3 is an enlarged view of the support structure illustrated in Fig. 2.
Fig. 4 is an enlarged view of a portion of a support structure for a tensioner device according to a different embodiment of the present invention.
Fig. 5 is an enlarged view of a portion of a support structure for a tensioner device according to a still different embodiment of the present invention.

### BEST MODE FOR CARRYING OUT THE INVENTION

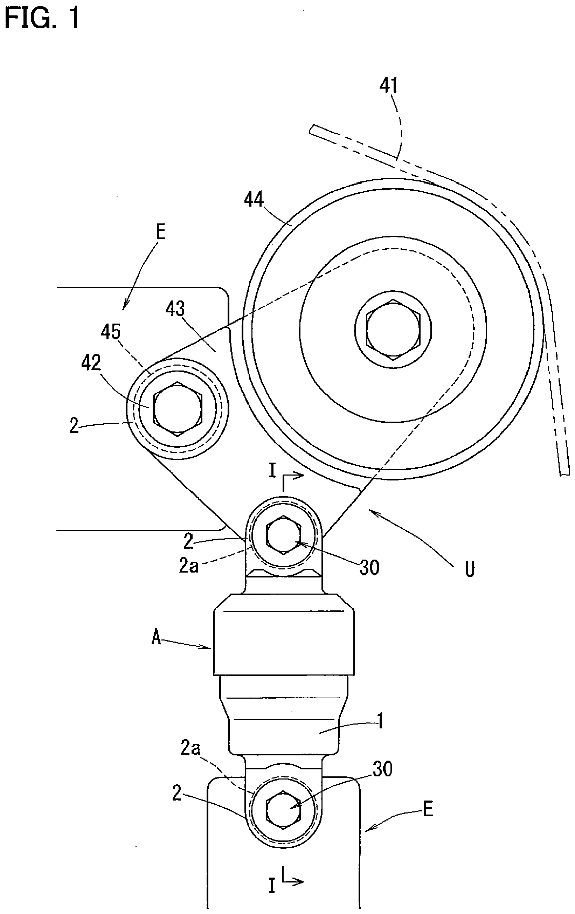

The embodiments of the present invention are now described with reference to Figs. 1 to 5. Fig. 1 illustrates a tensioner unit/device U according to the present invention, while mounted to a belt transmission device for driving engine accessories and adjusting the tension of the belt 41 of the belt transmission device.

As illustrated in Fig. 1, the tensioner unit U comprises a pulley arm 43 pivotally supported by a stationary portion such as an engine block (hereinafter referred to as "the stationary member E"); a tension pulley 44 rotatably supported by the pulley arm 43; and a tensioner (hydraulic auto-tensioner) A coupled to the pulley arm 43 so as to be pivotable relative to the pullet arm 43.

The pulley arm 43 includes, as a pivotally supported portion pivotally fixed to the stationary member E, a through hole 45 through which a pivotally supporting shaft (support bolt) 42 is inserted. The body 1 of the hydraulic auto-tensioner A has one end portion thereof pivotally coupled to a portion of the pulley arm 43 located between the pivotally supported portion and a pulley support portion of the pulley arm 43 that supports the tension pulley 44, and the one end portion of the body 1 constitutes a damper attachment portion. The other end portion of the body 1 of the hydraulic auto-tensioner A is pivotally coupled to the stationary member E, and constitutes a damper support portion.

With the tensioner unit U mounted to the belt transmission device in this way, the tension pulley 44 is be pressed against the belt 41 by the adjustment force applied to the pulley arm 43 from the hydraulic auto-tensioner A, so that the tension of the belt 41 is maintained at a predetermined value.

The main portion of the body 1 of the hydraulic auto-tensioner A is formed by die casting using an aluminum alloy. The body 1 includes, at the one end portion thereof (end portion closer to the pulley arm 43), a first coupled portion 2 constituting the damper attachment portion (where the body 1 is pivotally coupled to the pulley arm 43). The main body 1 also includes, at the other end portion thereof, a second coupled portion 2 constituting the damper support portion (where the body 1 is pivotally coupled to the fixing member E). The pulley arm 43 includes a third coupled portion 2 constituting the pivotally supported portion (where the pulley arm 43 is pivotally fixed to the stationary member E.

Of the first to third coupled portions 2, the structure of the second coupled portion 2, namely the damper support portion (at which the body 1 of the hydraulic auto-tensioner A is coupled to the stationary member E) is described along with the structures around the second coupled portion 2.

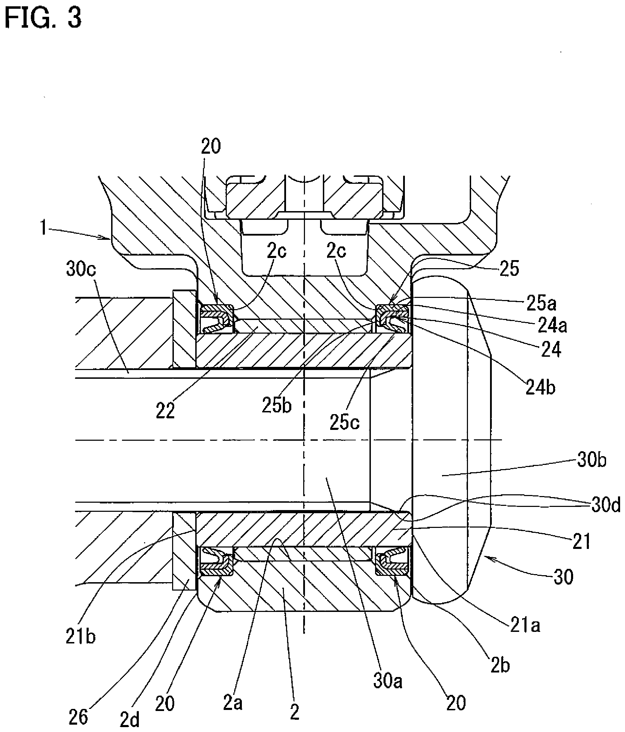

The second coupled portion 2 includes a through hole 2a extending through the second coupled portion 2 from one end surface thereof on the right side of Fig. 3 to the other end surface thereof on the left side of Fig. 3. An elastic ring as a liner 22 is press-fitted in the through hole 2a, and a bearing bush as a cylindrical support member 21 is inserted in the liner 22.

In order to reduce the resistance to pivoting motion between the cylindrical support member 21 and the liner 22, the liner 22 is preferably made of a material having a low frictional resistance, e.g., a sintered metal containing lubricating oil. Alternatively, the liner 22 may be an elastic ring made of an elastic material.

A support bolt 30 functioning as a support shaft is inserted through the cylindrical support member 21. The cylindrical support member 21 may be made of a metal having strength enough to withstand the tightening of the support bolt 30, and sufficient durability against the pivoting of the tensioner.

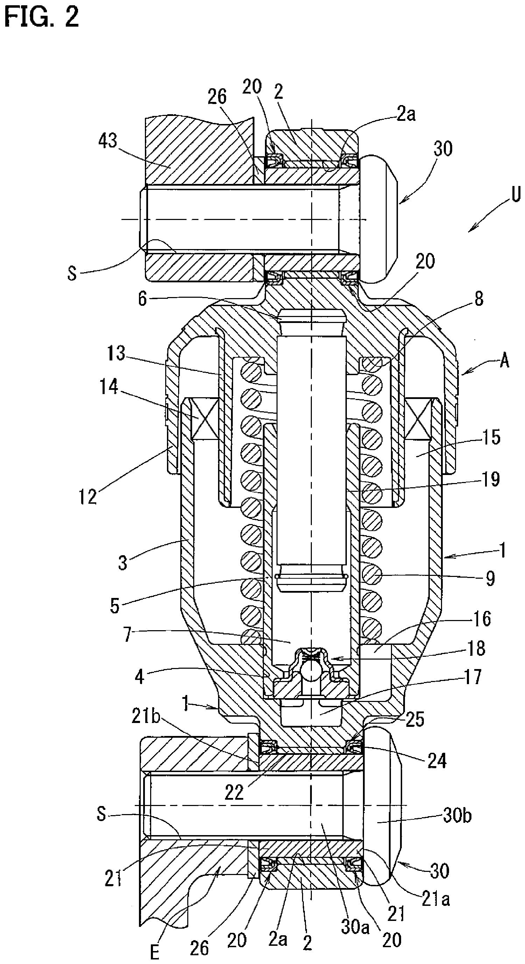

As illustrated in Figs. 2 and 3, the support bolt 30 comprises a shaft 30a and a head 30b at one end of the shaft 30a. The shaft 30a comprises a threaded shaft portion 30c including the other end of the shaft 30a; and a non-threaded straight portion 30d located closer to the head 30c than is the threaded shaft portion 30c. The straight portion 30d has an outer diameter such that, with the support bolt 30 inserted, a minute radial gap is defined between the radially inner surface of the cylindrical support member 21 and the straight portion 30d.

The support bolt 30 is fixed in position together with the cylindrical support member 21 by inserting the support bolt 30 through the through hole 2a, and screwing the distal end portion of the threaded shaft portion 30c of the support bolt 30 into a threaded hole s in the stationary member E.

As illustrated in Fig. 2, the inner end surface of the head 30b of the support bolt 30 is in abutment with one end surface 21a of the cylindrical support member 21. A washer such as a thrust washer, or any other appropriate member may be mounted between the inner end surface of the head 30b and the one end surface 21a of the cylindrical support member 21.

A washer 26 is mounted between, and kept in abutment with, the other end surface 21b of the cylindrical support member 21 and the end surface of the stationary member E.

By tightening the support bolt 30, the cylindrical support member 21 is fixed in position around the outer periphery of the support bolt 30. With the cylindrical support member 21 fixed in this way, the support member 21 and the liner 22, press-fitted in the through hole 2a, function as a sliding bearing by rotating about the center axis relative to each other while kept in surface contact with each other. Thus, the body 1 of the hydraulic auto-tensioner A is supported so as to be pivotable relative to the stationary member E.

The damper attachment portion, which includes the first coupled portion 2, at which the body 1 of the hydraulic auto-tensioner 1 is coupled to the pulley arm 43, and the pivotally supported portion, which includes the third coupled portion 2, at which the pulley arm 43 is coupled to the stationary member E, are identical in structure to the damper support portion. For the damper attachment portion, the through hole 2a is disposed in the body 1, and the threaded hole s is disposed in the pulley arm 43. For the pivotally supported portion, the through hole 2a is disposed in the pulley arm 43, and the threaded hole s is disposed in the stationary member E.

As illustrated in Fig. 2, the hydraulic auto-tensioner A includes, in its interior, a cylinder 3 extending in the direction of an imaginary straight line extending between the first and second coupled portions 2. The cylinder 3 has a sleeve fitting hole 4 in the top surface of its bottom, and the lower end portion of a sleeve 5 made of steel is press-fitted in the sleeve fitting hole 4. The sleeve 5 has a top opening through which the lower portion of a rod 6 is slidably inserted into the sleeve 5, thereby defining a pressure chamber 7 in the sleeve 5.

A spring seat 8 is fixed to the upper end portion of the rod 6, which is located outside of the cylinder 3. A return spring 9 is mounted between the spring seat 8 and the bottom surface of the cylinder 3, and biases the spring seat 8 in the direction in which the rod 6 protrudes out of the cylinder 3.

The spring seat 8 is formed by molding in a mold with an upper portion of the tubular collar 13 inserted in the mold so that the upper portion of the collar 13 is integrally embedded in the spring seat 8. An oil seal 14 as a seal member is mounted in the top opening of the cylinder 3 with the inner periphery of the oil seal 14 kept in elastic contact with the outer peripheral surface of the collar 13, thereby closing the top opening of the cylinder 3. Together with an outer tubular portion 12 disposed around the oil seal 14, the oil seal 14 prevents hydraulic oil in the cylinder 3 from leaking out of the cylinder 3, and also prevents foreign matter from entering the cylinder 3.

The thus-mounted oil seal 14 defines a hermetically sealed reservoir chamber 15 between the cylinder 3 and the sleeve 5. The reservoir chamber 15 and the pressure chamber 7 communicate with each other through oil passages 16 formed between the fitting surfaces of the sleeve fitting hole 4 and the sleeve 5, and through an oil reservoir 17 comprising a circular recess formed in the center of the bottom surface of the sleeve fitting hole 4.

A check valve 18 is mounted in the bottom end portion of the sleeve 5. When the pressure in the pressure chamber 7 exceeds the pressure in the reservoir chamber 15, the check valve 18 blocks communication between the pressure chamber 7 and the oil passages 16, thereby preventing hydraulic oil in the pressure chamber 7 from flowing into the reservoir chamber 15 through the oil passages 16.

The first coupled portion 2, at which the tensioner is coupled to the pulley arm 43, is located above the cylinder 3, more specifically, above the spring seat 8. The second coupled portion 2, at which the tensioner is coupled to the stationary member E, is located under the cylinder 3, more specifically, under the reservoir chamber 15.

It is now described how the tensioner unit U, which includes the hydraulic auto-tensioner A, operates, while mounted to the belt transmission device. The tension of the belt 41 changes due to, e.g., fluctuations in loads applied to engine accessories. The hydraulic auto-tensioner A is configured such that, when the tension of the belt 41 decreases, the pushing force of the return spring 9 moves the cylinder 3 and the rod 6 in the direction in which the rod 6 protrudes out of the cylinder 3, thereby absorbing the looseness of the belt 41.

When the cylinder 3 and the rod 6 moves in this direction, the pressure in the pressure chamber 7 becomes lower than the pressure in the reservoir chamber 15, so that the check valve 18 opens, and hydraulic oil in the reservoir chamber 15 smoothly flows into the pressure chamber 7 through the oil passages 16. This enables the cylinder 3 and the rod 6 to smoothly move in the direction in which the rod 6 protrudes out of the cylinder 3, thereby quickly absorbing the looseness of the belt 41.

On the other hand, when the tension of the belt 41 increases, a push-in force that tends to push the rod 6 into the cylinder 3 is applied from the belt 41 to the hydraulic auto-tensioner A. Due to this, the pressure in the pressure chamber 7 becomes higher than the pressure in the reservoir chamber 15, so that the check valve 18 closes.

As a result, hydraulic oil in the pressure chamber 7 flows into the reservoir chamber 15 through a leakage gap 19 defined between the radially inner surface of the sleeve 5 and the radially outer surface of the rod 6, and due to the viscous resistance of the hydraulic oil flowing in the leakage gap 19, a hydraulic damper force is generated in the pressure chamber 7. This hydraulic damper force dampens the push-in force applied to the hydraulic auto-tensioner A from the belt 41, and thus the cylinder 3 and the rod 6 slowly move relative to each other in the direction in which the rod 6 is pushed into the cylinder 3 until the push-in force balances with the elastic force of the return spring 9.

When the cylinder 3 and the rod 6 of the hydraulic auto-tensioner A move relative to each other in the above two opposite directions, the two members coupled together at each of the damper attachment portion, the damper support portion and the pivotally supported portion make a pivoting motion relative to each other. At each coupled portion 2, while supporting this pivoting motion, the cylindrical support member 21, which is fixed in position around the outer periphery of the support bolt 30, and the liner 22, which is press-fitted in the through hole 2a of the coupled portion 2, function as a sliding bearing while kept in surface contact with each other.

Both axial ends of the cylindrical support member 21, which is fixed in position by the support bolt 30, are located axially outwardly of the respective axial ends of the liner 22, which is press-fitted against the inner surface of the through hole 2a. Also, a radial gap is defined between the radially outer surface of the cylindrical support member 21 and the radially inner surface of the liner 22. Therefore, in order to prevent foreign matter from entering this radial gap 22 from around the respective axial end portions of the radially outer surface of the cylindrical support member 21, seal members 20 are mounted at the respective axial end portions of the sliding bearing.

As illustrated in Figs. 2 and 3, the seal members 20 according to this embodiment each includes a base portion 25a press-fitted against the inner surface of the through hole 2a; an inwardly extending portion 25b extending radially inwardly from the base portion 25a; and a lip portion 25c connected to the distal edge of the inwardly extending portion 25b. The distal ends of the lip portions 25c of the respective seal members 20 are in sliding contact with the outer surface of the cylindrical support member 21, thereby providing a seal between the sliding surfaces of the cylindrical support surface 21 and the liner 22.

In the vicinity of the seal member 20 on the right side of Fig. 3, the inner end surface of the head 30b of the support bolt 30 is opposed through a minute gap to an end surface 2b around the opening of the through hole 2a. In the vicinity of the seal member 20 on the left side of Fig. 3, the washer 26 is mounted between the other end surface 21b of the cylindrical support member 21 and the stationary member E such that the inner end surface of the washer 26 is opposed through a minute gap to an end surface 2d around the opening of the through hole 2a. The seal members 20 are disposed in spaces located both radially and axially inwardly of the respective minute gaps.

In this embodiment, the through hole 2a includes steps 2c disposed on the respective axial end portions of the inner surface of the through hole 2a, and each having a diameter somewhat larger than that of the axially central portion of the through hole 2c. The base portions 25a of the seal members 20 are press-fitted against the inner surfaces of the respective steps 2c. Therefore, each seal member 20 is firmly fixed in position in the corner of the through hole 2a constituted by the inner surface of the step 2c and the axial end surface thereof intersecting with the inner surface. The formation of the steps 2c enables the base portions 25a of the seal members 20 to have an increased radial thickness, and thus to increase the rigidity and strength of the seal members 20.

The inner surface of each step 2c is constituted by a cylindrical surface. In this embodiment, the axial end surface of each step 2c extends in the direction orthogonal to the axial direction of the sliding bearing, namely orthogonal to the axis of the inner (cylindrical) surface of the step 2c. However, for example, the axial end surface of each step 2c may extend in a direction oblique to the direction orthogonal to the axial direction. In this case, the corner constituted by the inner surface and the axial end surface of the step 2c preferably has an acute angle.

The lip portion 25c of each seal member 20 extends axially outwardly from its root to its distal end. Since the base portion 25a is in abutment with the axial end surface of the step 2c, even if the distal end of the lip portion 25c is pressed toward the root thereof, the base portion 25a never moves in the axial direction.

The base portion 25a, the inwardly extending portion 25b and the lip portion 25c are constituted by a covering member 25 made of a rubber or a resin. A core 24 is embedded in the covering member 25. The core 24 may be made of a metal, or a material other than metal such as resin that is harder than the material forming the covering member 25. The core 24 may be entirely embedded in the covering member 25, or may be embedded in the covering member 25 such that a portion of the core 24 is exposed to, or protrudes beyond, the surface of the covering member 25.

By embedding the core 24 in the covering member 25, it is possible to increase the rigidity and strength of the seal member 20, and also to more firmly fixedly press-fit the seal member 20 against the inner surface of the through hole 2a.

In this embodiment, the core 24 (of each seal member 20) includes a core base portion 24a embedded in the base portion 25a; and an inwardly extending core portion 24b extending radially inwardly from the core base portion 24a, and has an L-shaped cross section. The core base portion 24a is a cylindrical member located within the base portion 25a. The inwardly extending core portion 24b is a disk-shaped member located within the inwardly extending portion 25b. By using, as the core 24, a member having an L-shaped cross section, it is possible to further increase the rigidity and strength of the seal member 20.

It is preferable that, as in this embodiment, the inwardly extending portion 25b extends radially inwardly from the axially inner end of the base portion 25a, and the lip portion 25c extends axially outwardly from its root to its distal end. However, provided that it is possible to ensure predetermined seal performance and durability, the position of the base portion 25a from which the inwardly extending portion 25b extends, and the direction in which the lip portion 25c extends from its root to its distal end may be inverted. More specifically, the inwardly extending portion 25b may extend radially inwardly from the axially outer end of the base portion 25a, and the lip portion 25c may extend axially inwardly from its root to its distal end.

If necessary, the inwardly extending portion 25b may be omitted, in which case the lip portion 25c extends directly from the base portion 25a. Also, if necessary, the inwardly extending core portion 24b may be omitted in each of the above embodiment and variations. The core 24 may also be omitted, provided that the seal member 20 has sufficient rigidity and strength, and can be fixedly press-fitted, in a sufficiently firm manner, against the inner surface of the through hole 2a.

While, in the embodiment of Figs. 2 and 3, the lip portions 25c of both seal members 20 are in sliding contact with the outer surface of the cylindrical support member 21, the lip portion 25c of one of the seal members 20 may be in sliding contact with an axially inner surface of an end surface sealing member that is in abutment with the axial end surface 21a of the cylindrical support member 21.

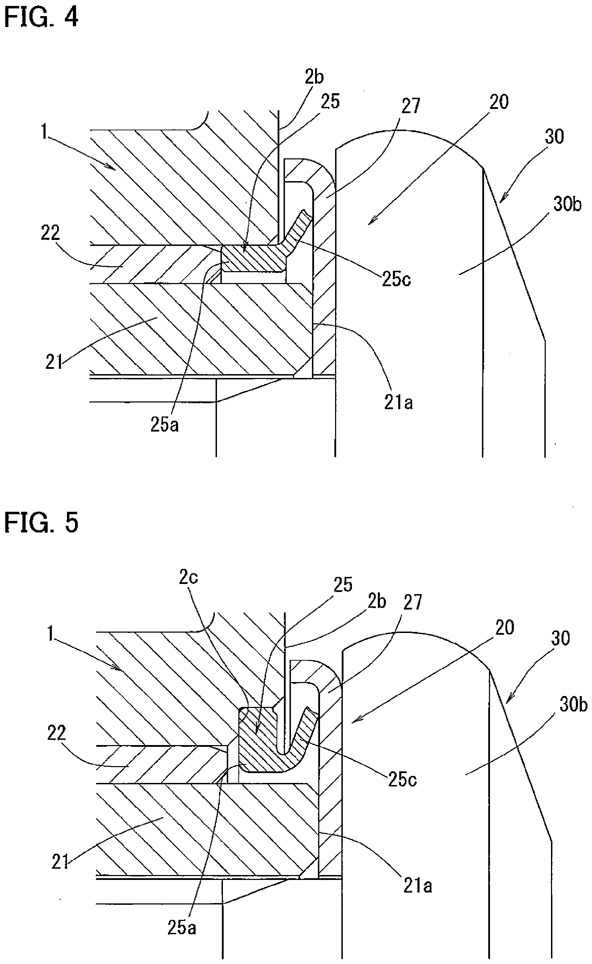

For example, in the embodiment of Fig. 4, such an end surface sealing member comprises a slinger member 27 opposed through a gap to the end surface 2b around the opening of the through hole 2a. By tightening the support bolt 30, the slinger member 27 is fixed in position by being sandwiched between the axial end surface 21a of the cylindrical support member 21 and the inner end surface of the head 30b of the support bolt 30.

The gap between the slinger member 27 and the end surface 2b around the opening of the through hole 2a is minute enough to prevent foreign matter from entering the inner space located inwardly of the slinger member 27. Also, the sliding contact of the lip portion 25c with the inner surface of the slinger member 27 provides a sufficient seal between the cylindrical support member 21 and the liner 22.

The embodiment of Fig. 5 is different from the embodiment of Fig. 4 in that the through hole 2a includes steps 2c disposed on the respective axial end portions of the inner surface of the through hole 2a, and each having a diameter somewhat larger than that of the axially central portion of the through hole 2c. The advantages of the steps 2c have been already explained in the embodiment of Figs. 2 and 3.

While, in each of the embodiments of Figs. 4 and 5, the lip portion 25c of each seal members 20 extends from its root to its distal end in the radially outward direction of the sliding bearing, this direction may be inverted. Specifically, the lip portion 25c may extend from its root to its distal end in the radially inward direction of the sliding bearing. Also, while the core 24 is not mounted to the covering member 25 in each of the embodiments of Figs. 4 and 5, it may be used as necessary in these embodiments too.

Also, in each of the embodiments of Figs. 4 and 5, for example, the end surface sealing member may be constituted by the inner end surface of the head 30b of the support bolt 30 so that the lip portion 25c of the one of the seal members 20 comes into sliding contact with the inner end surface of the head 30b as the end surface sealing member.

Each of the seal member 20 of the damper support portion closer to the fixing member E; the seal member 20 of the damper attachment portion closer to the pulley arm 43; and the seal member 20 of the pivotally supported portion closer to the fixing member E may be configured such that the inner end surface of the washer 26, which is mounted between the other end surface 21b of the cylindrical support member 21 and the fixing member E, between the other end surface 21b of the cylindrical support member 21 and the pulley arm 43, or between the other end surface 21b of the cylindrical support member 21 and the fixing member E, serves as the end surface sealing member of the embodiments of Figs. 4 and 5. In this case, as in Figs. 2 and 3, the inner end surface of the washer 26 may be in abutment with the other end surface 21b of the cylindrical support member 21.

In each of the above embodiments, three tensioner support structures having the above-described configuration are used, respectively, at the damper attachment portion, at which the one end of the body 1 of the hydraulic auto-tensioner A is coupled to the pulley arm 43; the damper support portion, at which the other end of the body 1 of the hydraulic auto-tensioner A is coupled to the stationary member E such as an engine block; and the pivotally supported portion, at which the pulley arm 43 is coupled to the stationary member E such as an engine block. However, only one or two of them may be used.

### DESCRIPTION OF REFERENCE NUMERALS

1: body
2: first, second, and third coupled portions
2a: through hole
2b: end surface
2c: step
3: cylinder
4: sleeve fitting hole
5: sleeve
6: rod
7: pressure chamber
8: spring seat 9: return spring
12: outer tubular portion
13: collar
14: oil seal
15: reservoir chamber
16: oil passage
17: oil reservoir
18: check valve
19: leakage gap
20: seal member
21: cylindrical support member
22: liner
24: core
24a: core base portion
24b: inwardly extending core portion
25: covering member
25a: base portion
25b: inwardly extending portion
25c: lip portion
26: washer
27: slinger member
30: support bolt
30a: shaft
30b: head
30c: threaded shaft portion
30d: straight portion
41: belt
42: pivotally supporting shaft (support bolt)
43: pulley arm
44: tension pulley
A: tensioner (hydraulic auto-tensioner)
U: tension unit
E: stationary member

## Claims

1. A support structure for a tensioner device that includes a pulley arm (43) having a tension pulley (44) and coupled to a stationary member (E), and a tensioner (A) coupled to the pulley arm (43) and the stationary member (E), wherein a first member and a second member that are selected from the stationary member (E), the pulley arm (43), and the tensioner (A) are pivotally coupled together by the support structure,
the support structure comprising: a cylindrical support member (21) fixed in position around an outer periphery of a support shaft disposed at the first member, wherein the support shaft comprises a support bolt (30) having a head (30b), and screwed into the first member;
a liner (22) press-fitted in a through hole (2a) disposed in the second member, the liner (22) having an inner surface in sliding contact with an outer surface of the cylindrical support member (21); and
a seal member (20) providing a seal between an inner surface of the through hole (2a) and the outer surface of the cylindrical support member (21), the seal member (20) including:
a base portion (25a) press-fitted against the inner surface of the through hole (2a); and
a lip portion (25c) extending from the base portion (25a);
**characterised in that** an inner end surface of the head (30b) of the support bolt (30) is opposed through a minute gap to an end surface (2b) around an opening of the through hole (2a), and
the seal member (20) is disposed in a space located radially and axially inwardly of the minute gap.

2. The support structure according to claim 1, wherein the lip portion (25c) is in sliding contact with the outer surface of the cylindrical support member (21).

3. The support structure according to claim 1, further comprising an end surface sealing member in abutment with an axial end surface of the cylindrical support member (21),
wherein the lip portion (25c) is in sliding contact with an axially inner surface of the end surface sealing member, and the end surface sealing member is constituted by the inner end surface of the head (30b) of the support bolt (30).

4. The support structure according to any one of claims 1 to 3, wherein the through hole (2a) includes a step (2c) on an axial end portion of the inner surface of the through hole (2a), and wherein the base portion (25a) is press-fitted against an inner surface of the step (2c).

5. The support structure according to any one of claims 1 to 4, wherein the base portion (25a) and the lip portion (25c) are constituted by a covering member (25) made of rubber or resin, and
wherein the seal member (20) further comprises a core (24) embedded in the covering member (25).

## Patentansprüche

1. Tragestruktur für eine Spannvorrichtung, die einen Rollen-Arm (43), der eine Spannrolle (44) aufweist und mit einem stationären Element (E) gekoppelt ist, sowie einen Spanner (A) enthält, der mit dem Rollen-Arm (43) und dem stationären Element (E) gekoppelt ist, wobei ein erstes Element und ein zweites Element, die aus dem stationären Element (E), dem Rollen-Arm (43) und dem Spanner (A) ausgewählt werden, über die Tragestruktur schwenkbar miteinander gekoppelt sind,
wobei die Tragestruktur umfasst:
ein zylindrisches Trageelement (21), das an einer Position um einen Außenumfang einer Tragewelle herum fixiert ist, die an dem ersten Element angeordnet ist, wobei die Tragewelle einen Tragebolzen (30) umfasst, der einen Kopf (30b) hat und in das erste Element eingeschraubt ist;
eine Auskleidung (22), die in ein in dem zweiten Element angeordnetes Durchgangsloch (2a) pressgepasst ist, wobei die Auskleidung (22) eine Innenfläche in Gleitkontakt mit einer Außenfläche des zylindrischen Trageelementes (21) aufweist; sowie
ein Dichtungselement (20), das eine Dichtung zwischen einer Innenfläche des Durchgangslochs (2a) und der Außenfläche des zylindrischen Trageelementes (21) bildet, wobei das Dichtungselement (20) enthält:
einen Basisabschnitt (25a), der an die Innenfläche des Durchgangslochs (2a) pressgepasst ist; und
einen Lippenabschnitt (25c), der sich von dem Basisabschnitt (25a) aus erstreckt;
**dadurch gekennzeichnet, dass** eine innere Endfläche des Kopfes (30b) des Tragebolzens (30) über einen sehr kleinen Spalt einer Endfläche (2b) um eine Öffnung des Durchgangslochs (2a) herum gegenüberliegt, und
das Dichtungselement (20) in einem Raum angeordnet ist, der radial und axial innerhalb des sehr kleinen Spalts liegt.

2. Tragestruktur nach Anspruch 1, wobei der Lippenabschnitt (25c) in Gleitkontakt mit der Außenfläche des zylindrischen Trageelementes (21) ist.

3. Tragestruktur nach Anspruch 1, die des Weiteren ein Endflächen-Dichtungselement umfasst, das an einer axialen Endfläche des zylindrischen Trageelementes (21) anliegt,
wobei der Lippenabschnitt (25c) in Gleitkontakt mit einer axial innenliegenden Fläche des Endflächen-Dichtungselementes ist und das Endflächen-Dichtungselement durch die innere Endfläche des Kopfes (30b) des Tragebolzens (30) gebildet wird.

4. Tragestruktur nach einem der Ansprüche 1 bis 3, wobei das Durchgangsloch (2a) einen Absatz (2c) an einem axialen Endabschnitt der Innenfläche des Durchgangslochs (2a) enthält und der Basisabschnitt (25a) an eine Innenfläche des Absatzes (2c) pressgepasst ist.

5. Tragestruktur nach einem der Ansprüche 1 bis 4, wobei der Basisabschnitt (25a) und der Lippenabschnitt (25c) durch ein Abdeckelement (25) aus Gummi oder Kunststoff gebildet werden, und
das Dichtungselement (20) des Weiteren einen Kern (24) umfasst, der in das Abdeckelement (25) eingebettet ist.

## Revendications

1. Structure de support pour un dispositif tendeur qui comprend un bras de poulie (43) ayant une poulie de tension (44) et couplé à un élément stationnaire (E), et un tendeur (A) couplé au bras de poulie (43) et à l'élément stationnaire (E), dans lequel un premier élément et un second élément qui sont choisis parmi l'élément stationnaire (E), le bras de poulie (43), et le tendeur (A) sont couplés ensemble de manière pivotante par la structure de support,
la structure de support comprenant : un élément de support cylindrique (21) fixé en position autour d'une périphérie extérieure d'un arbre de support disposé au niveau du premier élément, dans laquelle l'arbre de support comprend un boulon de support (30) ayant une tête (30b), et vissé dans le premier membre ;
une doublure (22) ajustée par pression dans un trou traversant (2a) disposé dans le second élément, la doublure (22) ayant une surface intérieure en contact glissant avec une surface extérieure de l'élément de support cylindrique (21) ; et
un élément d'étanchéité (20) établissant un joint entre une surface intérieure du trou traversant (2a) et la surface extérieure de l'élément de support cylindrique (21), l'élément d'étanchéité (20) comprenant :
une partie de base (25a) ajustée par pression contre la surface intérieure du trou traversant (2a) ; et
une partie de lèvre (25c) s'étendant depuis la partie de base (25a) ;
**caractérisée en ce qu'**une surface d'extrémité intérieure de la tête (30b) du boulon de support (30) est opposée à travers un minuscule écartement à une surface d'extrémité (2b) autour d'une ouverture du trou traversant (2a), et
l'élément d'étanchéité (20) est disposé dans un espace situé radialement et axialement vers l'intérieur du minuscule écartement.

2. Structure de support selon la revendication 1, dans laquelle la portion de lèvre (25c) est en contact glissant avec la surface extérieure de l'élément de support cylindrique (21).

3. Structure de support selon la revendication 1, comprenant en outre un élément d'étanchéité de surface d'extrémité en appui avec une surface d'extrémité axiale de l'élément de support cylindrique (21),
dans laquelle la partie de lèvre (25c) est en contact glissant avec une surface axialement intérieure de l'élément d'étanchéité de surface d'extrémité, et l'élément d'étanchéité de surface d'extrémité est constitué de la surface d'extrémité intérieure de la tête (30b) du boulon de support (30).

4. Structure de support selon l'une quelconque des revendications 1 à 3, dans laquelle le trou traversant (2a) comprend une marche (2c) sur une partie d'extrémité axiale de la surface intérieure du trou traversant (2a), et dans laquelle la partie de base (25a) est ajustée par pression contre une surface intérieure de la marche (2c).

5. Structure de support selon l'une quelconque des revendications 1 à 4, dans laquelle la partie de base (25a) et la partie de lèvre (25c) sont constituées d'un élément de recouvrement (25) réalisé en caoutchouc ou en résine, et
dans laquelle l'élément d'étanchéité (20) comprend en outre un noyau (24) incorporé dans l'élément de recouvrement (25).
